Europäisches Patentamt

European Patent Office

Office européen des brevets

(11) Veröffentlichungsnummer: **0 253 972**
A1

(12) # EUROPÄISCHE PATENTANMELDUNG

(21) Anmeldenummer: 87106764.1

(22) Anmeldetag: 09.05.87

(51) Int. Cl.³: **B 65 G 65/02**
**B 66 C 9/04**

(30) Priorität: 14.05.86 DE 3616259

(43) Veröffentlichungstag der Anmeldung:
27.01.88 Patentblatt 88/4

(84) Benannte Vertragsstaaten:
BE DE FR GB NL

(71) Anmelder: Oppermann + Deichmann Inh. Reinhard
Lippe Maschinenfabrik
Pfingststrasse 12
D-3300 Braunschweig(DE)

(72) Erfinder: Lippe, Reinhard, Dipl.-Ing.
Auf dem Anger 9
D-3300 Braunschweig(DE)

(72) Erfinder: Voigt, Dietmar
David Mausfeldweg 11
D-3300 Braunschweig(DE)

(74) Vertreter: Döring, Rudolf, Dr.-Ing.
Patentanwälte Dr.-Ing. R. Döring Dipl.-Phys. Dr. J. Fricke
Jasperallee 1a
D-3300 Braunschweig(DE)

(54) Verfahrbare sowie verschwenkbare Brücke zum Überspannen von Silos bzw. Lagerflächen.

(57) Die verfahrbare, sowie verschwenkbare Brücke zur
Überspannung von Silos bzw. Lagerflächen, welche in der
Draufsicht wenigstens teilweise längs eines Radius verlaufen, ist an wenigstens einem Ende mit einem Fahrwerk
ausgerüstet, welches gegensinnig in bzw. gegen die Fahrtrichtung weisende auslegerartige Tragkonsolen (12, 12a)
aufweist, die scharnierartig an einem von dem Brückenkörper (1a) nach unten weisenden Tragbolzen (18) unabhängig
voneinander schwenkbar gehalten sind.

*Figur 2*

EP 0 253 972 A1

Oppermann + Deichmann
Inh.: Reinhard Lippe
Maschinenfabrik
Pfingststr. 12

3300 Braunschweig

**Verfahrbare sowie verschwenkbare Brücke zum Überspanndn von Silos bzw. Lagerflächen**

Die Erfindung betrifft eine verfahrbare, sowie verschwenkbare Brücke zum Überspannen von Silos bzw.
Lagerflächen, welche in der Draufsicht wenigstens
teilweise längs eines Radius verlaufen, insbesondere
einen hypodromartigen Verlauf aufweisen, wobei der
Brückenkörper sich an beiden Enden über Fahrwerke
auf beiderseits der überspannten Fläche angeordneten
Schienen abstützt.

Zum Beschicken und Räumen von Silos bzw. Lagerflächen
der vorgenannten Art, wie sie insbesondere zur vorübergehenden Stapelung von Feldfrüchten, wie Zuckerrüben
in Zuckerfabriken verwendet werden, sind verfahrbare
sowie verschwenkbare Brücken in der beschriebenen
Ausführung bekannt und mit entsprechenden Einrichtungen
zum Ablegen bzw. Aufnehmen der Feldfrüchte ausgerüstet.

Die bekannten verfahrbaren, sowie verschwenkbaren Brücken sind in der Regel mit ihrem einen Ende über einen Radkranz auf einem diesem zugeordneten Fahrwerk gelagert, während das andere Ende der Brücke auf einem Fahrwerk ruht, dessen Räder bzw. Radlager in einer mit dem Brückenkörper fest verbundenen Stützeinrichtung gehalten sind. In der Regel sind dabei zwei in Fahrtrichtung hintereinander angeordnete Räder vorgesehen, die sich auf einer entsprechenden Schiene abstützen. Durch die bekannte Ausbildung der Brücken ist es möglich, diese sowohl in Längsrichtung der von ihnen überspannten Lagerflächen, als auch durch Verschwenkung um den auf der einen Seite angeordneten Radkranz über längs eines Radius verlaufende Lagerflächen hinwegzubewegen, so daß mit derartigen Brücken auch kreisringförmige, sowie hypodromartig verlaufende Lagerflächen überfahren werden können.

Bei der Verschwenkbewegung der Brücke wird das den Drehkranz abstützende Fahrwerk im Zentrum der kreisförmigen Schwenkbewegung der Brücke gehalten. Der äußere Radius der Lagerfläche in diesem Bereich bestimmt somit unabhängig von der Breite der Lagerfläche die Länge der Brücke.

Bei großen Krümmungsradien des äußeren Randes der Lagerfläche bereitet das Verschwenken der Brücke über diese Lagerfläche hinweg keine nennenswerten Schwierigkeiten, wenn der Abstand der auf dem Außenumfang der Lagerfläche laufenden Räder des entsprechenden Fahrwerkes gering ist. Bei größerem Abstand der Räder ergeben sich jedoch dadurch Probleme, daß die Räder miteinander fluchten und nur im Rahmen ihres axialen Spieles dem Krümmungsradius der auf dem Außenumfang der Lagerfläche angeordneten Schienen folgen können. Der Abstand der Räder wird somit durch den Krümmungsradius der von der Brücke zu bestreichenden Lagerfläche bestimmt.

Bei Brücken großer Spannweite bzw. bei Lagerflächen mit einem relativ kleinen äußeren Krümmungsradius können durch den notwendigen geringen Abstand der auf dem äußeren Krümmungsradius laufenden Räder des Fahrgestelles Stabilitätsprobleme auftreten. In jedem Falle ist jedoch ein erheblicher Verschleiß an den Rädern bzw. den mit den Rädern zusammenwirkenden Schienen unvermeidbar. Ferner sind für die Durchführung der Schwenkbewegungen zur Überwindung der erhöhten Reibung die zu dem genannten Verschleiß führt, entsprechend größere Antriebskräfte erforderlich.

Der Erfindung liegt die Aufgabe zugrunde, hier Abhilfe zu schaffen und eine Brücke der eingangs beschriebenen Art so auszubilden, daß bei ihrer Verfahr- bzw. Verschwenkbewegung entlang eines Radius verlaufender Lagerflächen eine freie Wahl des Radabstandes an den Fahrwerken ermöglicht wird und die Verfahrbewegung beim Überfahren der gekrümmt verlaufenden Lagerflächen ohne zusätzliche Verschleiß- bzw. ohne die Überwindung zusätzlicher Reibkräfte ermöglicht wird.

Zur Lösung vorstehender Aufgabe kennzeichnet sich die genannte Brücke erfindungsgemäß dadurch, daß wenigstens eines der Fahrwerke gegensinnig in bzw. gegen die Fahrtrichtung weisende auslegerartige Tragkonsolen mit am jeweiligen äußeren Konsolenende vorgesehenen Radlagern und Rädern aufweist, und daß die Tragkonsolen scharnierartig an einem von dem Brückenkörper zur Schiene weisenden Tragbolzen um diesen unabhängig voneinander verschwenkbar gehalten sind.

Durch die vorgenannte Ausführung können die Räder des Fahrwerkes unabhängig voneinander dem Krümmungsradius der Schienen folgen und aus diesem Grunde einen großen Abstand voneinander aufweisen und entsprechend den Stabilitätserfordernissen der Brücke an entsprechend weit ausladenden Tragkonsolen angeordnet sein. Für die Abstützung der Brücke mittels des beschriebenen Fahrwerkes sind lediglich zwei in Fahrtrichtung im Abstand angeordnete Räder erforderlich, die ihrerseits über starre Achsen in Radlagern gehalten sind. Hierdurch ergibt sich eine außerordentlich einfache Konstruktion.

In der Regel genügt es, wenn eines der Fahrwerke der Brücke, nämlich das auf dem Außenumfang der radial verlaufenden Lagerfläche laufende Fahrwerk entsprechend ausgebildet wird. Es ist jedoch bei schmalen langgestreckten und auch längs eines Radius verlaufenden Abschnitten der Lagerflächen möglich, beide Fahrwerke in der beschriebenen Weise auszubilden, so daß die beiden Fahrwerke den unterschiedlichen Krümmungsradien entlang des gekrümmten Teiles der Lagerfläche ohne weiteres folgen können.

Die Tragkonsolen des in der oben beschriebenen Weise ausgebildeten Fahrwerkes können als Fachwerke ausgebildet sein. Diese konstruktive Lösung kommt insbesondere in Betracht, wenn es sich um Fahrwerke für sehr große Brücken mit weit ausladenden Tragkonsolen handelt. In der Regel genügt es jedoch, wenn gemäß einer zweckmäßigen Ausgestaltung die Tragkonsolen aus parallel im Abstand zueinander gehaltenen Tragblechen nach Art von Knotenblechen bestehen, welche mit parallel zu den Schienen verlaufenden unteren Trägern für die Aufnahme der Radlager und an ihren dem Tragbolzen zugekehrten Seiten über obere und untere vorspringende Ringformteile mit dem Durchmesser des Tragbolzens angepaßten Bohrungen mit dem Tragbolzen verbunden sind. Die Tragbleche können dabei, ebenso wie die beschriebenen Fachwerkkonstruktionen, eine in der Seitenansicht dreieckförmige Umrißgestalt aufweisen mit vom Brückenkörper zur Schiene hin abnehmender Höhe.

Die schwenkbare Lagerung der Tragkonsolen auf dem vom Brückenkörper nach unten weisenden Tragbolzen kann dadurch sehr einfach gestaltet werden, daß eine Tragkonsole mit in der Seitenansicht gabelförmigen Ringformteilen und die andere Tragkonsole mit jeweils in die Gabel dieser Formteile eingreifenden augenförmigen Ringformteilen ausgerüstet sind. Dabei genügt es in der Regel, wenn an dem oberen und unteren Ende des Tragbolzens jeweils ein gabelförmiges Ringformteil und ein in dieses eingreifendes augenförmiges Ringformteil vorgesehen sind. Die genannten Ringformteile können dabei als Gleitlager ausgebildet sein, so daß allenfalls im Bereich der oberen Ringformteile ein zusätzliches Stützlager für die Übertragung der Brückenlast auf die Tragkonsolen vorzusehen ist.

Die Zeichnung gibt ein Ausführungsbeispiel der Erfindung in schematischer Darstellung wieder.

Es zeigen:

Fig. 1 die Seitenansicht einer erfindungsgemäß ausgebildeten Brücke, welche als Rücknahmebrücke für Zuckerrüben von einer Lagerfläche ausgebildet ist,

Fig. 2 eine Teilansicht in Blickrichtung entsprechend dem Pfeil A in Fig. 1 gegen das Fahrgestell der Brücke,

6

Fig. 3 einen Schnitt entlang der Schnittlinie III-III in Fig. 2.

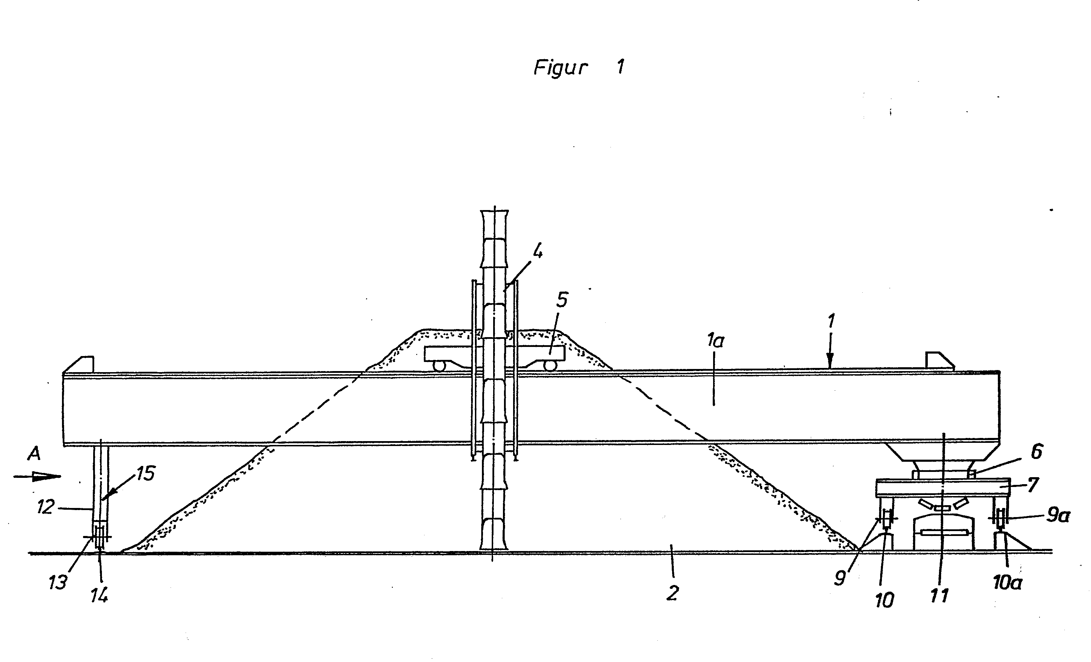

Die in der Fig. 1 wiedergegebene, insgesamt mit 1 bezeichnete Brücke, weist einen kastenförmigen Brückenkörper 1a auf und dient zur Entleerung eines Silos, auf dem ein Haufwerk 2 von Zuckerrüben lagert. Die Brücke 1 ist längs des Silos verfahrbar. Es sei angenommen, daß der Silo einen hypodromartigen Verlauf aufweist.

Der Brückenkörper 1a trägt in dem Ausführungsbeispiel ein insgesamt mit 4 bezeichnetes Schaufelrad, durch welches hindurch sich der Brückenkörper 1a erstreckt. Das Schaufelrad 4 ist auf dem Brückenkörper 1a mittels eines Fahrwerkes 5 längs des Brückenkörpers 1a hin und her verfahrbar.

Die Brücke 1 ist ihrerseits in Längsrichtung der Lagerfläche verfahrbar auf Schienen angeordnet und mit einem in der Zeichnung nicht wiedergegebenen Fahrantrieb ausgerüstet.

In dem Beispiel der Fig. 1 stützt die Brücke sich an ihrem in der Fig. 1 rechten Ende über einen Drehkranz 6 auf ein Fahrwerk 7 ab. Das Fahrwerk 7 ist mit in Brückenlängsrichtung im Abstand angeordneten Rädern 9 und 9a ausgerüstet, die auf entsprechend beabstandeten Schienen 10 bzw. 10a laufen. In dem Beispiel ist zwischen den Schienen 10 und 10a die auf etwas erhöhten Fundamenten angeordnet sind, ein Förderer 11 erkennbar, auf den die von dem Schaufelrad 4 aufgenommenen und über ein in der Zeichnung nicht wiedergegebenes Brückenband übergebenen Rüben weitergeleitet werden.

7

Das in Fig. 1 linke Ende der Brücke 1 stützt sich auf einem Fahrwerk 15 ab, dessen Räder 13 auf Schienen 14 laufen.

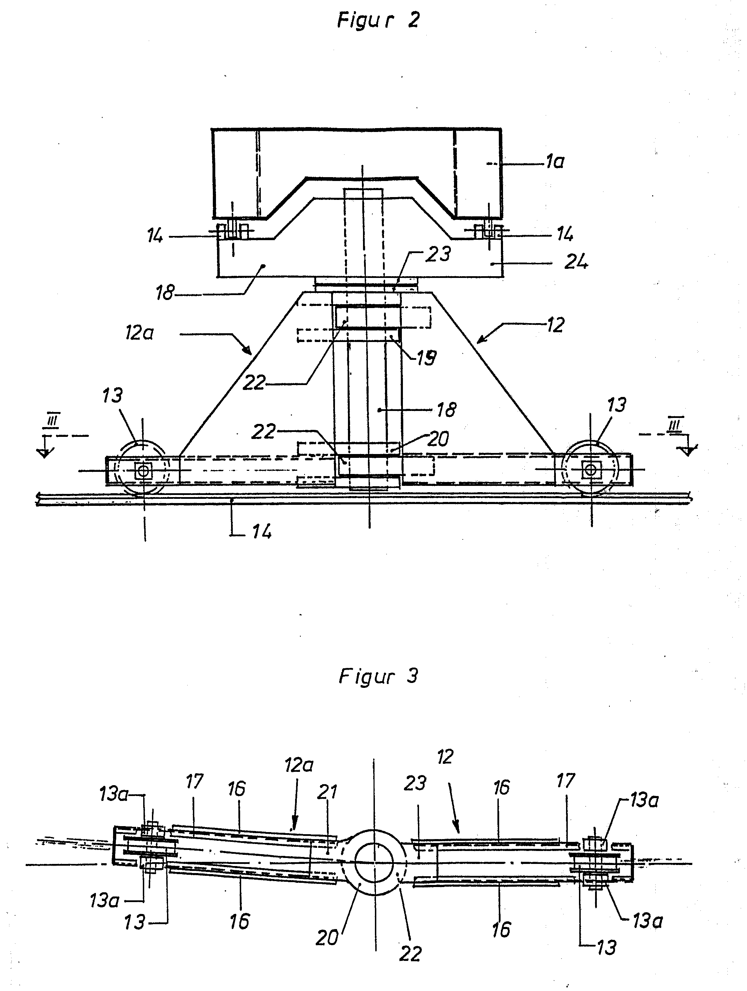

Das Fahrwerk 15 ist in seiner Ausbildung besonders deutlich aus den Fig. 2 und 3 erkennbar.

Das insgesamt mit 15 bezeichnete Fahrwerk stützt den Brückenkörper 1a nach Art einer Pendelstütze ab, um temperaturbedingte Längenänderungen des Brückenkörpers 1a auszugleichen. Zu diesem Zweck weist das Fahrwerk 12 einen Tragkörper 24 auf, der unter Zwischenanordnung von Pendellagern 14 den Brückenkörper 1a abstützt.

Unterhalb des Tragkörpers 24 sind in bzw. gegen die Fahrtrichtung weisende Tragkonsolen vorgesehen, die in dem dargestellten Beispiel der Fig. 2 und 3 jeweils aus im Abstand parallel zueinander verlaufenden und in der Seitenansicht dreieckförmigen Tragblechen 16 bestehen. Die Tragbleche 16 sind dabei nach Art von Knotenblechen ausgebildet.

Die Tragbleche 16 sind mit unteren parallel zu der Schiene 14 verlaufenden Trägern 17 ausgerüstet. Die Träger 17 nehmen an ihren freien Enden Radlager 13a für die Räder 13 auf.

Die Tragkonsolen 12 sind an ihren einander zugekehrten Enden scharnierartig auf einem von dem Brückenkörper 1a bzw. dem Tragkörper 24 nach unten weisenden Tragbolzen 18 um diesen unabhängig voneinander verschwenkbar gehalten. Zu diesem Zweck ist die Tragkonsole 12a an ihrer dem Tragbolzen 18 zugekehrten Seite oben und unten jeweils mit einem in der Seitenansicht gabelförmigen Ringbauteil 19 bzw. 20 ausgerüstet. Die Ringbau-

8

teile dienen gleichzeitig als Befestigungselemente für die Knotenbleche 16 und können sich mit einem in der Fig. 3 angedeuteten Ansatz 21 bis zwischen die Knotenbleche 16 erstrecken. Die Tragkonsole 12 ist ihrerseits mit in die Gabeln der gabelförmigen Ringbauteile 19 und 20 eingreifenden augenförmigen Ringbauteilen 22 ausgerüstet, wobei auch diese mit einem in der Fig. 3 angedeuteten vorspringenden Teil zwischen die Knotenbleche 16 eingreifen können.

Die Ringbauteile 19 bis 22 sind mit fluchtenden und dem Durchmessers des Tragbolzens 18 angepaßten Bohrungen ausgerüstet, wobei die Bohrungen auch mit zusätzlichen Lagerschalen versehen sein können, so daß die Bohrungen zusammen mit dem Tragbolzen als Gleitlager zusammenwirken.

Zwischen den Tragkonsolen 12 und 12a sowie dem Tragkörper 24 ist schließlich noch ein Druckring 23 vorgesehen, der auch als Ringlager ausgebildet sein kann.

Ansprüche

1. Verfahrbare, sowie verschwenkbare Brücke zum Überspannen von Silos bzw. Lagerflächen, welche in der Draufsicht wenigstens teilweise längs eines Radius verlaufen, insbesondere einen hypodromartigen Verlauf aufweisen, wobei der Brückenkörper sich an beiden Enden über Fahrwerke auf beiderseits der überspannten Fläche angeordnete Schienen abstützt, d a d u r c h   g e k e n n z e i c h n e t , daß wenigstens eines der Fahrwerke (15) gegensinnig in bzw. gegen die Fahrtrichtung weisende auslegerartige Tragkonsolen (12, 12a) mit am jeweiligen äußeren Konsolenende vorgesehenen Radlagern (13a) und Rädern (13) aufweist, und daß die Tragkonsolen scharnierartig an einem von dem Brückenkörper (1a) zur Schiene (14) weisenden Tragbolzen (18) um diesen unabhängig voneinander verschwenkbar gehalten sind.

2. Brücke nach Anspruch 1,   d a d u r c h   g e - k e n n z e i c h n e t ,   daß die Tragkonsolen (12,12a) als Fachwerke ausgebildet sind.

3. Brücke nach Anspruch 1,   d a d u r c h   g e - k e n n z e i c h n e t ,   daß die Tragkonsolen (12,12a) aus parallel im Abstand zueinander gehaltenen Tragblechen (16) nach Art von Knotenblechen bestehen, welche mit parallel zu den Schienen (14) verlaufenden unteren Trägern (17) für die Aufnahme der Radlager (13a) und an ihren, den Tragbolzen (18) zugekehrten Seiten über obere und untere vorspringende Ringformteile (19,20;22) mit dem Durchmesser des Tragbolzens (18) angepaßten Bohrungen mit dem Tragbolzen verbunden sind.

4. Brücke nach einem der Ansprüche 1 bis 3, d a - d u r c h   g e k e n n z e i c h n e t ,   daß eine Tragkonsole (12a) mit in der Seitenansicht gabelförmigen Ringformteilen (19,20) und die andere Tragkonsole (12) mit jeweils in die Gabel dieser Formteile eingreifenden augenförmigen Ringformteilen (22) ausgerüstet sind.

Figur 1

1/2

0253972

Figur 2

Figur 3

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 842 075 (MASCHINENFABRIK ANDRITZ) <br> * Seite 9, Zeile 16 - Seite 10, Zeile 24; Figuren 1-4 * | 1 | B 65 G 65/02 <br> B 66 C 9/04 |
| A | DE-C- 959 676 (MASCHINENFABRIK AUGSBURG-NÜRNBERG) <br> * Seite 1, Zeilen 17-33; Figuren 1, 2 * | 1 | |
| A | DE-A-1 781 131 (DEMAG-LAUCHHAMMER MASCHINENBAU UND STAHLBAU) <br> * Seite 2, Zeile 15 - Seite 3, Zeile 16; Figuren 1-3 * | 1 | |
| A | FR-A-2 482 061 (BARRE) <br> * Seite 6, Zeilen 2-15; Figuren 1-8 * | 1 | RECHERCHIERTE SACHGEBIETE (Int. Cl.4) |
| A | DE-U-1 994 471 (HILGERS) <br> * Figuren 1, 2 * | 4 | B 65 G 63/00 <br> B 65 G 65/00 <br> B 66 C 9/00 |

Der vorliegende Recherchenbericht wurde für alle Patentansprüche erstellt.

| Recherchenort | Abschlußdatum der Recherche | Prüfer |
|---|---|---|
| BERLIN | 23-11-1987 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82